# EUROPEAN PATENT SPECIFICATION

(11) **EP 3 153 624 B1**
(45) Date of publication and mention of the grant of the patent: **27.06.2018**
(21) Application number: 15190876.1
(22) Date of filing: 21.10.2015
(51) Int. Cl.: D21H 11/04, B32B 29/08, B65D 65/40, D21H 21/10, D21H 27/00

(54) **CORRUGATED BOARD**
WELLPAPPE
CARTON ONDULÉ

(30) Priority: 09.10.2015 EP 15189244
(43) Date of publication of application: 12.04.2017
(73) Proprietor: DS Smith Packaging Marketing N.V., 1935 Zaventem (BE)
(72) Inventor: FERGE, Thomas, 70563 Stuttgart (DE); RENMAN, Magnus, 13561 Tyresö (SE)
(74) Representative: Keil & Schaafhausen Patent- und Rechtsanwälte PartGmbB

(56) References cited:
- EP-A1- 2 868 470
- WO-A1-2010/039442
- US-A- 5 443 779

## Description

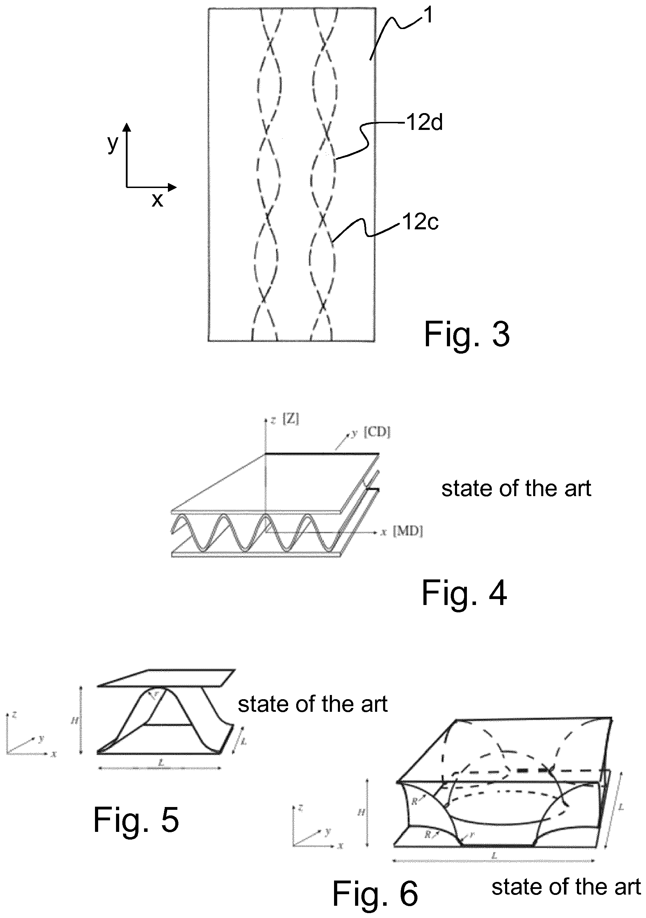

The structure known as corrugated board or corrugated fiberboard is a commonly paper-based material consisting of at least one liner (so-called single face material), preferably at least two liners, and at least one fluting, wherein each fluting is located on one adjacent liner, preferably between two adjacent liners, and attached to the respective liner(s). Corrugated board is mainly used for shipping containers and corrugated boxes and is made in a converting process in which two, preferably three or more layers of paper are laminated together. The upper or preferably middle ply, which is called fluting or core, is usually shaped into an approximately sine-wave structure during the corrugating process and the lower or preferably outer layer(s), called the liner(s), is (are) glued to the extreme points of the fluting, thus making a (liner-)fluting-liner sandwich. The resulting structure is strong and stiff with respect to its weight. Corrugated board is often approximated as being orthotropic, i.e. having three mutually perpendicular planes of symmetry. The principal directions of material symmetry of a corrugated core sandwich are defined as machine direction (MD) or x-direction, cross direction (CD) or y-direction, perpendicular to MD in the plane, and the out-of-plane thickness direction (Z) or z-direction. Examples of conventional corrugated board with a sinusoidal fluting showing the different directions are depicted in Fig. 4 and 5.

Beside the sinusoidal fluting other fluting profiles have been used and investigated before in terms of their mechanical properties. Such profiles are for example a hemispherical profile (see Fig. 6) or trapezoidal profile. The trapezoidal fluting comprises straight sections running (basically) parallel to the adjacent liner which alternate with inclined sections running inclined with regard to the two adjacent liners (see e.g. "Abschlussbericht der Projektpartner PTS, GVLmbH und Fraunhofer AVV für den Zeitraum 1.6.2002 bis 30.11.2005", Forschungsthema "Integrierter Umweltschutz in der Verpackungsindustrie, Reduktion des Materialeinsatzes für Wellpappe durch ein kontinuierliches Längswellverfahren", Dresden, 28.04.2006). Another example of corrugated board that includes a fluting forming a trapezoidal profile is known from US 5443779 A. In service, a corrugated paperboard package may be subjected to a number of different loading situations. A common loading situation is when compressive loads are involved. This might be the case when e.g. a number of filled packages are stacked on top of each other, which might then cause a global instability due to in-plane compressive loads so that some (or all) of the sides of the package will deflect due to bending. Such loading will also cause in-plane shear loading. Having too low transverse shear stiffness might in turn cause another type of instability, e.g. dimpling, resulting in collapse by a fold in the face sheets of the corrugated board structure or a collapse in the flute structure. This means that the transverse shear stiffness of the core is crucial for the structure's overall stiffness.

Another crucial type of loading is when the structure is loaded with compressive loads normal to the plane of the panel, i.e. in the z-direction. This can happen during e.g. printing when the corrugated paperboard is forced through a roller nip under high pressure or when cutting holes in the board with die cutting. Having too low out-of-plane strength may introduce local failure/damage in the core that later might influence the compressive response of the whole structure. Hence, it is the object of the present invention to provide a corrugated board with enhanced mechanical properties.

The above problem is solved by a corrugated board with a trapezoidal fluting profile in machine direction as described above, wherein the straight sections and the inclined sections of the fluting comprise a waviness in the cross direction (y-direction) transversal to the machine direction (x-direction) and transversal to the thickness direction (z-direction) such that the width of each straight section periodically varies between a minimum value (lmin) and a maximum value (lmax), wherein lmin > 0 and lmax > lmin.

This means that due to the width variation the straight sections form in cross direction (y-direction) a row of more or less hexagonal planes with a period or length l, wherein the minimum width of the "hexagon" measured in x-direction is Imin and the maximum width measured in x-direction is lmax. As the side edges of the "hexagon" are formed by the inclined sections, the inclination angle of the inclined sections measured in the plane formed by the x-direction and z-direction (x-z-plane) varies accordingly between a minimum value and a maximum value. Further, the inclined sections do not run perpendicular to the x-z-plane as the state of the art trapezoidal core but are tilted to this plane. This tilt angle is different for two adjacent inclined sections. The tilt angle directly depends on the difference lmax - lmin. In a preferred embodiment the wavelength l of the width variation is < 50 mm, preferably < 10 mm. The wavelength l of the width variation is measured in cross direction (y-direction). Preferably, the inclination angle of the inclined section measured within the x-z-plane is between 20° and 90°.

With regard to the present application the term "corrugated board" comprises corrugated structures in the conventional meaning of the term "corrugated board" consisting of paper, cardboard and/or plastic material, preferably as indicated below, and corrugated structures consisting of or comprising metal material, for example iron alloy or aluminum alloy, containing Fe or Al as the main component (by weight%). The paper, cardboard, plastic and metal materials, preferably as mentioned within this application, can be combined.

In embodiments of the present invention the waviness of the fluting in the cross direction is either straight or curved. Therein straight waviness means that the transition of the width from the minimum value to the maximum value is a straight line with a turning point at the respective extreme value forming a sharp edge. In contrast, the curved waviness comprises a smooth transition at the turning point of the respective extreme value with a rounded section. The straight waviness provides slightly higher mechanical stability, whereas the curved embodiment is has advantages in the manufacturing process for paper based materials.

It was shown by finite element modeling that the inventive corrugated board with the waviness in the cross direction has a better mechanical performance than the standard sinusoidal fluting profile. In particular, the wavy trapezoidal fluting has a higher initial shear stiffness in machine direction (x-direction) and therefore higher initial compression strength, less prone to initial damage and hence bending failures. In the cross direction (y-direction) the initial shear stiffness is at least comparable to the standard sinusoidal fluting. Regarding the compressive load in the thickness direction (z-direction), the initial stiffness is even 2 to 5 times higher than for the standard sinusoidal core. Overall, the mechanical performance of the corrugated board is enhanced and it is expected that the inventive corrugated board also has increased BCT (box compression test) performance. The risk of mechanical failure of the inventive corrugated board is therefore substantially reduced. Another important advantage of the inventive corrugated board with the wavy trapezoidal structure is that the materials usage is comparable to the standard sinusoidal corrugated board.

The mechanical behavior is particularly enhanced if according to a preferred embodiment of the invention the period of the width variation of an upper straight section is shifted with regard to the period of the width variation of a lower straight section of the same fluting, preferably by half the wavelength l of the width variation. This means that the inclination angle of the inclined section does not only vary with regard to the x-z-plane but the inclined sections are also internally twisted around an axis running parallel to the z-direction.

With regard to the usage of the inventive corrugated board, the following dimensions of the profile are preferred.
- The minimum value lmin of the waviness of the fluting is between L/50 and L/5, preferably between L/20 and L/5. The minimum value lmin is measured in machine direction (x-direction).
- Further, the maximum value lmax of the waviness of the fluting is between L/10 and L/2, preferably between L/5 and L/2. The maximum value lmax is measured in machine direction (x-direction).
- The ratio of the maximum value lmax and the minimum value lmin of the waviness of the fluting in the cross direction is greater than or equal to 1.5 (lmax/lmin ≥ 1.5), preferably greater than or equal to 2 (lmax/lmin ≥ 2).

In another embodiment the fluting comprises in the machine direction (x-direction), that means within x-z-plane, a predefined radius r in a transition section between each straight section and its adjacent inclined section, wherein the radius r is preferably between L/20 and L/5, most preferably between L/10 and L/5. A small radius prevents loss of mechanical stability due to folding and potential disruption of the fiber network in the fluting material.

In another embodiment the core cell length L of the trapezoidal profile in machine direction (x-direction) is less than or equal to 20 mm (L ≤ 20 mm), preferably less than or equal to 6.5 mm (L ≤ 6.5 mm).

Furthermore, the inventive corrugated board can be used with a wide range of materials. According to one aspect of the invention, the material of the liner and/or the fluting is according to the conventional meaning of the term "corrugated board" comprising preferably at least one of the materials of the following group containing
- all types of paper (Kraftliners, Testliners), preferably with a grammage between 40 g/m² and 500 g/m², including papers with a high amount of stretch (strain at break) between 5% and 15% (sack paper, lightweight paper),
- waste based fluting papers or semi-chemical papers, preferably with a grammage between 40 g/m² and 250 g/m²,
- all kind of thermoformable plastic material, preferably nonwoven material containing at least one of either PE fibers, PP fibers or PET fibers, preferably carded long fibers, needlepunched materials, thermobonded or chemically bonded materials,
- extruded materials, and
- metals, preferably iron and aluminum alloys.

Particularly preferred, the material of the liner and the fluting comprises paper and is different regarding its composition. However, an inventive corrugated board wherein the liners and the fluting have the same composition is also possible. Also with regard to other materials mentioned about it is possible to use the same composition for both liners and fluting or a different composition dependent on the application of the corrugated board.

The invention will now be described in more detail on the basis of preferred embodiments and the drawings. All features described or illustrated form the subject matter of the invention independent of their combination in the claims or their back reference.

In the drawings:
- Fig. 1: shows schematically a first embodiment of the inventive corrugated board in a perspective side view,
- Fig. 2: depicts schematically a top view of the first embodiment of the inventive corrugated board,
- Fig. 3: depicts schematically a top view of a second embodiment of the inventive corrugated board,
- Fig. 4: shows schematically a state of the art sinusoidal corrugated board in a perspective side view,
- Fig. 5: depicts schematically another example of a state of the art sinusoidal corrugated board used as a structure for comparison with the inventive corrugated board,
- Fig. 6: shows schematically another example of a state of the art hemispherical corrugated board used as a structure for comparison with the inventive corrugated board,
- Fig. 7: depicts a schematic of plate shear loading of the sandwich panels along the machine direction (x-direction) used in the finite element analysis,
- Fig. 8: depicts a schematic of plate shear loading of the sandwich panels along the cross direction (y-direction) used in the finite element analysis,
- Fig. 9: depicts a flat crush test model (FCT, z-direction),
- Fig. 10: shows numerical results of the flat crush test using the below described finite element model, in particular the average contact pressure P [MPa] versus strain response, wherein the initial height of the structure is H, for the below described state of the art arc-tangent fluting, the inventive wavy trapezoid fluting and the below described state of the art hemispherical fluting,
- Fig. 11: shows numerical results of plate shear loading along machine direction (x-direction) using the below described finite element model, in particular the transverse shear stress Txz = Nx / A [MPa] versus the horizontal displacement Ux / λ for the below described state of the art arc-tangent fluting, the inventive wavy trapezoidal fluting and the below described state of the art hemispherical fluting, and
- Fig. 12: shows numerical results of plate shear loading along cross direction (y-direction) using the below described finite element model, in particular the transverse shear stress Tyz = Ny / A [MPa] versus the horizontal displacement Uy / λ for the below described state of the art arc-tangent fluting, the inventive wavy trapezoid fluting and the below described state of the art hemispherical fluting.

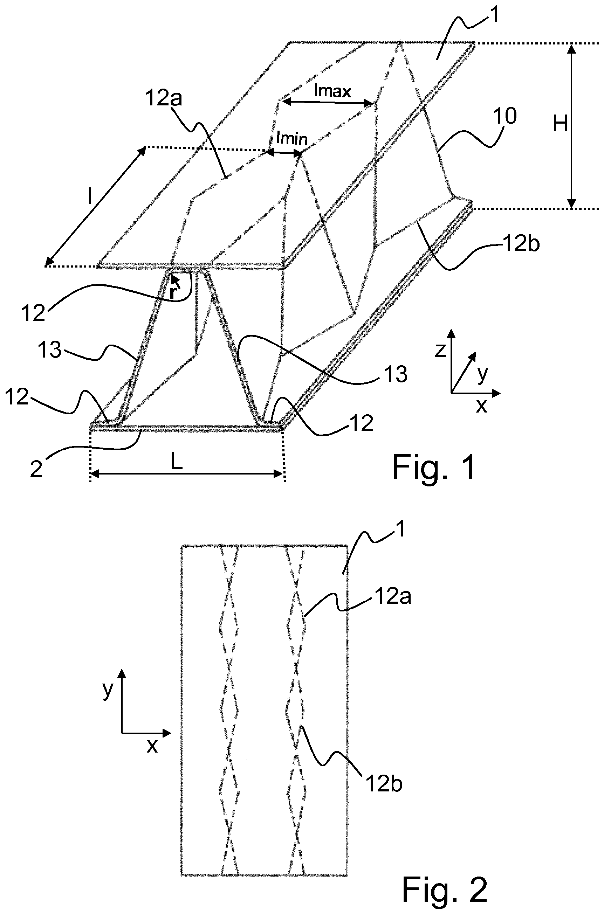

A first embodiment of the inventive wavy trapezoidal corrugated board is shown in Fig. 1 and 2. The board comprises a first (top) liner 1 and a second (bottom) liner 2 and a trapezoidal fluting 10 accommodated between the first liner 1 and the second liner 2. The fluting 10 consists of straight sections 12 running parallel to the liners 1, 2 and inclined sections 13 running inclined to the first liner 1 and the second liner 2. The straight sections 12 alternate with the inclined sections 13. Further, in a transition section between one straight section 12 and one inclined section 13 a rounded section with the radius r is formed, which is quite small in the embodiment depicted in Fig. 1. The core cell of the trapeze in x-direction has a length L and a predefined height in z-direction. The overall height of the corrugated board in z-direction including the thickness of the first liner 1 and the second liner 2 is indicated in Fig. 1 with the reference sign H.

The waviness in the cross direction (y-direction) is provided by a width variation of the straight sections 12 between a minimum value lmin and a minimum value Imax. Fig. 1 shows a straight waviness, which means that the inclined sections 12 form a sharp edge at each extreme width value (lmin, lmax). In contrast, the second embodiment shown in Fig. 3 shows a curved version of the waviness.

The width variation in y-direction has a wavelength l over which length the straight sections form a hexagonal surface (in case of the straight waviness, see Fig. 1 and 2) and a similar area (in case of the curved waviness, see Fig. 3). The fluting 10 is glued with its straight sections 12 to the first liner 1 or the second liner 2.

As one can derive from Fig. 2, the period of the upper straight section 12a is shifted by 1/2 of its wavelength I with regard to the lower straight section 12b. Accordingly, the inclined sections 13 connecting the upper straight section 12a with the lower straight section 12b do not only run non-perpendicular to the x-z-plane but are also slightly twisted around an axis parallel to the z-axis.

The inventive corrugated board as depicted in Fig. 1 and 2 was compared with other structures in terms of its mechanical properties using a finite element model.

Fig. 1, 2, 5 and 6 show schematics of the three core shapes analyzed: the inventive wavy trapezoidal (Fig. 1, 2), an arc-tangent (Fig. 5) and a hemispherical core shape (Fig. 6). In the finite element model the core has a height of 2.03 mm in all cases. The thickness of the sheets in both liners 1, 2 and fluting 10 is 0.2 mm. Thus, the total height H of the whole structure (i.e. two liners and the fluting) equals 2.43 mm.

The side-length L of the unit cell, equal in both the x- and y-directions, depends on the shape of the fluting.

The cross-section of the inventive trapezoidal fluting with l = L = λ used for the modelling is defined by the radius r = 0.5 mm and the length of the straight segments (l) on top and bottom. This length varies linearly along the y-axis in a symmetrical manner, wherein lmin = 0.5 mm at y = 0 and y = L while lmax = 1.0 mm at y = L / 2. The side-length for this core is also L = 5 mm.

The arc-tangent core (see Fig. 5) consists of two arcs with radius r = 1.0 mm connected by straight segments. This fluting is similar to the traditional corrugated web fluting used in industry. The fluting has constant geometry along the cross direction (y-direction) and has the side-length L = λ = 5 mm.

The hemispherical fluting shown in Fig. 6 is defined by its main radius R = λ / 2 = 2.5 mm and the arc radius r = 0.5 mm. The positions of the hemispheres follow a square pattern in the x-y-plane with a center-center distance L = 8/5 λ = 8 mm.

The structural behavior of web-core sandwich panels with the three types of core shapes were analyzed by finite element models employing large deformations and rotations. The sandwich layers are assumed orthotropic elastic-plastic having an isotropic bilinear kinematic strain-hardening behavior. Plate shear and flat crush models are used to simulate shear and compressive loadings of the structures. The material properties used in the analyses are typical for fluting paper materials in a corrugated board. The constituent paper material is described as an orthotropic elastic-plastic continuum material with a bilinear kinematic hardening behavior. The behavior is assumed to be symmetric with respect to tension/compression. For simplicity, the material is assumed to be the same in the liners and the fluting. The paper is considered as an orthotropic material with in-plane elastic stiffnesses Eₓ = 4.75 GPa, E_{y} = 1.56 GPa and shear stiffness G_{xy} = 1.05 GPa. The out-of-plane elastic stiffness E_{z} = 0.03 GPa and out-of-plane shear stiffnesses G_{yz} = G_{xz} = 0.06 GPa.

The Poisson's ratios are v_{xy} = 0.168 and v_{xz} = v_{yz} = 0.01 (see document Erkkilä A.L., Leppänen T., Hämäläinen J., Empirical plasticity models applied for paper sheets having different anisotropy and dry solids content levels, Int. J. Solids Struct. 50, pages 2151-2179, 2013). For the plastic regime, Hill's classical flow criterion for orthotropic plasticity was applied according to Isaksson P., Hägglund R., Gradin P., Continuum damage mechanics applied to paper., Int. J. Solids Struct. 41, pages 4731-4755, 2004, Hill R., The mathematical theory of plasticity, Clarendon Press, Oxford UK, 1950, and Ansys 14, Swanson analysis systems, Houston, PA. 2011.

For the finite element implementation isoparametric shell elements are used that are capable to handle both thick and thin general shell structures, material and geometrical nonlinear behavior, as well as large rotations and deformations using a total Lagrangian formulation (see Theory and Modeling Guide, ADINA R&D Inc., Watertown MA, USA. 2005, and Dvorkin E., Bathe K.J., A continuum mechanics based four-node shell element for general nonlinear analysis, Engng Comp. 1, pages 77-88, 1984). The element has 4 nodes, each having 6 degrees of freedom: 3 translations and 3 rotations about the global x-, y- and z-directions. A thorough description of this shell element can be found in Bathe (ref. Bathe K.J., Finite element procedures, Prentice-Hall, New Jersey, 2006, Theory and Modeling Guide, ADINA R&D Inc., Watertown MA, USA. 2005, and Dvorkin E., Bathe K.J., A continuum mechanics based four-node shell element for general nonlinear analysis., Engng Comp. 1, pages 77-88, 1984). The arc-tangent, wavy trapezoidal and hemispherical flutings were represented by 900, 900 and 2304 elements, respectively. Hence, the elements' length-to-thickness ratios are about 1, which is well within the limit for the element (see Theory and Modeling Guide, ADINA R&D Inc., Watertown MA, USA, 2005). The liner sheets are connected to the fluting crests at common nodes. In order to prevent interpenetration between the liner sheets and fluting at large deformations and rotations, frictionless contact rigid-rigid pairs are used (ref. Theory and Modeling Guide, ADINA R&D Inc., Watertown MA, USA, 2005]). The contact algorithm uses constraint functions to enforce that all conditions of a frictionless slip contact are fulfilled at the nodes in contact. In order to solve the nonlinear problem, a modified Newton-Raphson iterative process is applied at every load step until all contact conditions are fulfilled and force-equilibrium prevails throughout the structure.

The plate shear test is a common method to determine the shear response of a sandwich structure. As described in the ASTM C273 standard (see ASTM standard C 273-00, Standard test method for shear properties of sandwich core materials. ASTM, West Conshohocken (PA, USA), ASTM international, 2000), this test consists of an element of the sandwich panel adhesively bonded to two metal plates. By displacing the plates along their planes, but in opposite directions, the specimen will be loaded in out-of-plane shear.

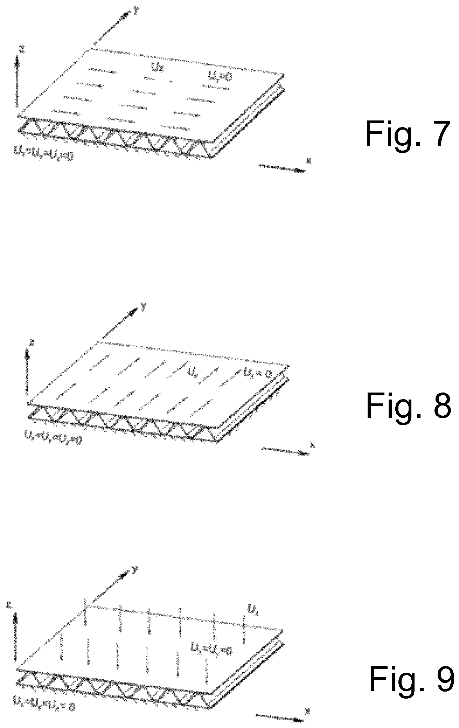

With regard to the shear along the machine direction (x-direction), the structure is oriented so that shear displacements act in the machine direction of the structure, see Fig. 7. To simulate the plate test, the bottom face sheet of the unit cell is fixed (i.e. displacements Uₓ = U_{y} = U_{z} = 0 of all nodes), where (x, y, z) is the global Cartesian coordinate system. To promote shear distortion of the unit cell in the transverse x-z-plane, a displacement Uₓ is given in successive steps to all the nodes of the top face until a total displacement of Uₓ / λ = 0.1 is achieved. To reach a consistent shear load in the x-z-plane of the unit-cell structure, the displacements of the nodes at the top are constrained in the y-direction (U_{y} = 0) and their rotations ϕₓ and ϕ_{y} around the x- and y-axes are constrained to zero. In addition, periodic boundary conditions of the edge rotations are applied so that ϕₓ (y = 0,z) = ϕₓ (y = L,z) and ϕ_{y} (x = 0,z) = ϕ_{y} (x = L,z). The total horizontal force Nₓ along the x-direction is obtained by summing the nodal reaction forces of all nodes on the top face.

The block shear model in the cross direction (y-direction, see Fig. 8, is similar to the one in x-direction. The bottom sheets are fixed. To promote shear distortion of the unit cell in the transverse y - z plane, a displacement U_{y} is given in successive steps to all the nodes of the top face until a total displacement of U_{y} / λ = 0.1 is achieved. The displacement of the nodes at the top face is constrained in the x-direction (Uₓ = 0) and their rotations ϕₓ = ϕ_{y} = 0. Periodic boundary conditions of the edge rotations are applied so that ϕₓ (y = 0,z) = ϕₓ (y = L,z) and ϕ_{y} (x = 0,z) = ϕ_{y} (x = L,z). The total horizontal force N_{y} along the y-direction is obtained by summing the nodal reaction forces of all nodes on the top face.

The flat crush test (FCT, see Fig. 9) is a frequently used method to measure the out-of-plane compressive strength of sandwich panels. According to the standard ISO 3035 (ref. ISO 3035, Single-faced and single-wall corrugated fibreboard - Determination of the flat crush resistance, 2nd edition, 1982-12-01, Geneva, Switzerland), the flat crush test consists in compressing a rectangular sandwich panel between two flat metal plates until collapse of the structure occurs. To simulate the test, the nodes on the bottom face sheets are fixed (i.e. displacements Uₓ = U_{y} = U_{z} = 0 of all nodes, see Fig. 9). In addition, no in-plane displacements are allowed at the top and bottom face, i.e. boundary conditions Uₓ = U_{y} = 0 are applied to the face nodes. A displacement -U_{z} along the z-direction is successively applied to all nodes on the top face until a total displacement of -U_{z} / h = 0.5 is achieved. The total vertical force N_{z} along the global z-direction is obtained by summing the nodal reaction forces of all nodes on the top face.

The sandwich panels with different web flutings are loaded in finite element models in both shear and compression consistent with the plate shear and flat crush loading configurations as described in previous sections. The layers in the board are always oriented so that the x-axis is in the machine direction and the y-axis is in the cross direction.

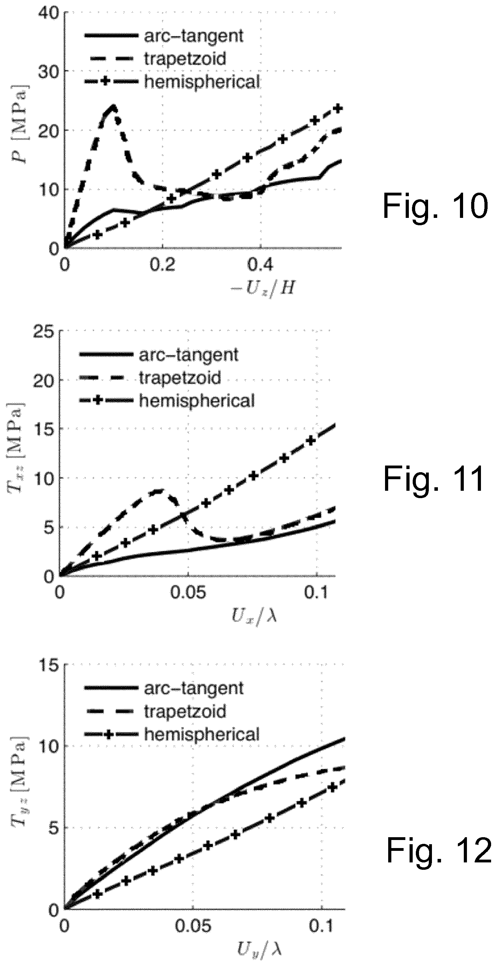

Figure 10 shows the average compressive stress P = -N_{z} / A vs. average strain U_{z} / H for the various flutings, where A is the area of the face sheets of the unit cell.

As seen in Fig. 10, the compressive response of the various cores is quite different. The wavy trapezoidal core has the highest initial stiffness, roughly 2 - 5 times higher than the arc-tangent and hemispherical cores. At about 10% contraction, the load of the trapezoidal core drops significantly and assumes a level close to that for the arc-tangent core and then continues to increase again.

The deformation processes of the various flutings are quite different. The arc-tangent fluting deforms symmetrically and the shape remains trapezoidal during compression. It is observed that deformation initiates by bending of the curved arcs while the straight segments rotate. At very large deformations the core buckles and assumes an essentially flat shape. The behavior for the trapezoidal fluting is similar with the important difference that the fluting in that case is able to carry a substantially higher initial load and is initially stiffer. Furthermore, the deformed shape remains trapezoidal although some bending is observed between the arcs and the face sheets at large deformation. The hemispherical fluting has a lower initial stiffness than the arc-tangent and trapezoidal cores.

This is not surprising since it initially has much smaller contact area between core and face sheet.

Figure 11 shows the transverse shear stress T_{xz} = Nₓ / A versus the horizontal displacement Uₓ / λ for the plate shear test models loaded in shear along the machine direction (x-direction).

As is observed in Fig. 11, the arc-tangent fluting has the lowest initial shear stiffness along x-direction while the trapezoidal fluting has the highest initial shear stiffness along x-direction. The hemispherical fluting has an initial stiffness somewhere in between those two. The hemispherical fluting has an almost constant shear stiffness in x-direction over the whole loading regime.

As is observed in Fig. 12, the arc-tangent and trapezoidal flutings have very similar initial shear stiffness when loaded in shear along y-direction.

It has been shown using finite element modelling that the arc-tangent and wavy trapezoidal cores deform in a complex manner.

The interesting result is that even though the wavy trapezoidal fluting has a design very similar to the arc-tangent fluting, it has better mechanical performance. Hence, with relatively simple actions, board manufacturers may increase the mechanical performance and provide improved packages to their customers without increasing their material usage. Applications for corrugated board with the improved mechanical properties may not only be found in the packaging industry but also for example in the furniture or automotive industry as a replacement for expensive plastic or wooden structures. Last but not least it shall be emphasized that the invention can also be used in a double wall corrugated board or a triple wall corrugated board.

## Claims

1. A corrugated board comprising at least one liner, preferably at least two liners (1,2), and at least one fluting (10), wherein each fluting (10) is located on one adjacent liner, preferably between two adjacent liners (1,2), wherein the at least one fluting (10) forms a trapezoidal profile in a machine direction (x-direction) comprising straight sections (12) running basically parallel to the adjacent liner (1,2) which alternate with inclined sections (13) running inclined with regard to the adjacent liner (1,2), **characterized in that** the straight sections (12) and the inclined sections (13) of the fluting comprise a waviness in a cross direction (y-direction) transversal to the machine direction (x-direction) and a thickness direction (z-direction) such that the width of each straight section (12) periodically varies between a minimum value (lₘᵢₙ) and a maximum value (lₘₐₓ).

2. The corrugated board according to claim 1, wherein a period of a width variation of an upper straight section (12a) is shifted with regard to a period of a width variation of a lower straight section (12b) of the same fluting (10), preferably by half the wavelength (l) of the width variation.

3. The corrugated board according to any of the previous claims, wherein the wavelength (l) of the width variation is less than 50 mm, preferably less than 10 mm.

4. The corrugated board according to any of the previous claims, wherein the minimum value (lₘᵢₙ) of the waviness of the fluting (10) is between L/50 and L/5, preferably between L/20 and L/5, wherein L is a core cell length of the trapezoidal profile in machine direction (x-direction).

5. The corrugated board according to any of the previous claims, wherein the maximum value (lₘₐₓ) of the waviness of the fluting (10) is between L/10 and L/2, preferably between L/5 and L/2.

6. The corrugated board according to any of the previous claims, wherein the ratio of the maximum value (lₘₐₓ) and the minimum value (lₘᵢₙ) of the waviness of the fluting (10) in the cross direction is greater than or equal to 1.5 (lₘₐₓ/lₘᵢₙ ≥ 1.5), preferably greater than or equal to 2 (lₘₐₓ/lₘᵢₙ ≥ 2).

7. The corrugated board according to any of the previous claims, wherein the waviness of the fluting (10) in the cross direction is either straight or curved.

8. The corrugated board according to any of the previous claims, wherein the fluting (10) comprises in the machine direction (x-direction) a predefined radius (r) in a transition section between each straight section (12) and its adjacent inclined section (13), wherein the radius (r) is preferably between L/20 and L/5, most preferably between L/10 and L/5.

9. The corrugated board according to any of the previous claims, wherein the core cell length (L) of the trapezoidal profile of the fluting (10) in machine direction (x-direction) is less than or equal to 20 mm (L ≤ 20 mm), preferably less than or equal to 6.5 mm (L ≤ 6.5mm).

10. The corrugated board according to any of the previous claims, wherein the material of the liner (1,2) and/or the fluting (10) comprises at least one of the materials of the following group containing
• all types of paper (Kraftliners, Testliners), preferably with a grammage between 40 g/m² and 500 g/m², including papers with a high amount of stretch (strain at break) between 5% and 15% (sack paper, lightweight paper),
• waste based fluting papers or semi-chemical papers, preferably with a grammage between 40 g/m² and 250 g/m²,
• all kind of thermoformable plastic material, preferably nonwoven material containing at least one of either PE fibers, PP fibers or PET fibers, preferably carded long fibers, needlepunched materials, thermobonded or chemically bonded materials,
• extruded materials, and
• metals, preferably iron and aluminum alloys,
wherein preferably the material of the liner (1,2) and the fluting (10) comprises paper and is different regarding its composition.

## Patentansprüche

1. Wellpappe, die wenigstens eine Decklage, vorzugsweise wenigstens zwei Decklagen (1, 2), und wenigstens eine Wellenbahn (10) umfasst, wobei jede Wellenbahn (10) auf einer benachbarten Decklage, vorzugsweise zwischen zwei benachbarten Decklagen (1, 2), angeordnet ist, wobei die wenigstens eine Wellenbahn (10) ein trapezförmiges Profil in einer Maschinenrichtung (x-Richtung) bildet, das gerade Sektionen (12) umfasst, die im Wesentlichen parallel zu der benachbarten Decklage (1, 2) verlaufen, die sich abwechseln mit geneigten Sektionen (13), die geneigt in Bezug auf die benachbarte Decklage (1, 2) verlaufen, **dadurch gekennzeichnet, dass** die geraden Sektionen (12) und die geneigten Sektionen (13) der Wellenbahn eine Welligkeit in einer Querrichtung (y-Richtung), quer zu der Maschinenrichtung (x-Richtung), und einer Dickenrichtung (z-Richtung) umfassen, so dass die Breite jeder geraden Sektion (12) periodisch zwischen einem Minimalwert (lₘᵢₙ) und einem Maximalwert (lₘₐₓ) variiert.

2. Wellpappe nach Anspruch 1, wobei eine Periode einer Breitenvariation einer oberen geraden Sektion (12a) in Bezug auf eine Periode einer Breitenvariation einer unteren geraden Sektion (12b) derselben Wellenbahn (10) verschoben ist, vorzugsweise um die halbe Wellenlänge (l) der Breitenvariation.

3. Wellpappe nach einem der vorhergehenden Ansprüche, wobei die Wellenlänge (l) der Breitenvariation kleiner als 50 mm, vorzugsweise kleiner als 10 mm, ist.

4. Wellpappe nach einem der vorhergehenden Ansprüche, wobei der Minimalwert (lₘᵢₙ) der Welligkeit der Wellenbahn (10) zwischen L/50 und L/5, vorzugsweise zwischen L/20 und L/5, beträgt, wobei L eine Kernzellenlänge des trapezförmigen Profils in der Maschinenrichtung (x-Richtung) ist.

5. Wellpappe nach einem der vorhergehenden Ansprüche, wobei der Maximalwert (lₘₐₓ) der Welligkeit der Wellenbahn (10) zwischen L/10 und L/2, vorzugsweise zwischen L/5 und L/2, beträgt.

6. Wellpappe nach einem der vorhergehenden Ansprüche, wobei das Verhältnis des Maximalwertes (lₘₐₓ) und des Minimalwertes (lₘᵢₙ) der Welligkeit der Wellenbahn (10) in der Querrichtung größer als oder gleich 1,5 (lₘₐₓ/ lₘᵢₙ ≥ 1,5), vorzugsweise größer als oder gleich 2 (lₘₐₓ/ lₘᵢₙ ≥ 2), ist.

7. Wellpappe nach einem der vorhergehenden Ansprüche, wobei die Welligkeit der Wellenbahn (10) in der Querrichtung entweder gerade oder gekrümmt ist.

8. Wellpappe nach einem der vorhergehenden Ansprüche, wobei die Wellenbahn (10) in der Maschinenrichtung (x-Richtung) einen vordefinierten Radius (r) in einer Übergangssektion zwischen jeder geraden Sektion (12) und ihrer benachbarten geneigten Sektion (13) umfasst, wobei der Radius (r) vorzugsweise zwischen L/20 und L/5, insbesondere zwischen L/10 und L/5, beträgt.

9. Wellpappe nach einem der vorhergehenden Ansprüche, wobei die Kernzellenlänge (L) des trapezförmigen Profils der Wellenbahn (10) in der Maschinenrichtung (x-Richtung) kleiner als oder gleich 20 mm (L ≤ 20 mm), vorzugsweise kleiner als oder gleich 6,5 mm (L ≤ 6,5 mm), ist.

10. Wellpappe nach einem der vorhergehenden Ansprüche, wobei das Material der Decklage (1, 2) und/oder der Wellenbahn (10) wenigstens eines der Materialien der folgenden Gruppe umfasst, die Folgendes enthält:
• alle Arten von Papier (Kraftliner, Testliner), vorzugsweise mit einem Flächengewicht zwischen 40 g/m² und 500 g/m², einschließlich von Papieren mit einem hohen Maß an Dehnung (Bruchdehnung) zwischen 5 % und 15 % (Sackpapier, Leichtpapier),
• Wellenstoffpapiere oder halbchemische Papiere, vorzugsweise mit einem Flächengewicht zwischen 40 g/m² und 250 g/m²,
• alle Arten von warmformbarem Kunststoffmaterial, vorzugsweise Vliesmaterial, das wenigstens eines von PE-Fasern, PP-Fasern oder PET-Fasern, vorzugsweise kardierten Langfasern, vernadelten Materialien, hitzeverfestigten oder chemisch verfestigten Materialien, enthält,
• stranggepresste Materialien und
• Metalle, vorzugsweise Eisen- und Aluminiumlegierungen,
wobei vorzugsweise das Material der Decklage (1, 2) und/oder der Wellenbahn (10) Papier umfasst und bezüglich seiner Zusammensetzung unterschiedlich ist.

## Revendications

1. Carton ondulé comprenant au moins un revêtement, de préférence au moins deux revêtements (1, 2), et au moins une cannelure (10), dans lequel chaque cannelure (10) se trouve sur un revêtement adjacent, de préférence entre deux revêtements adjacents (1, 2), dans lequel l'au moins une cannelure (10) forme un profil trapézoïdal dans une direction de machine (direction x) comprenant des sections droites (12) s'étendant essentiellement parallèlement au revêtement adjacent (1, 2), lesquelles alternent avec des sections inclinées (13) s'étendant de façon inclinée par rapport au revêtement adjacent (1, 2), **caractérisé en ce que** les sections droites (12) et les sections inclinées (13) de la cannelure comprennent une ondulation dans une direction transversale (direction y) transversale à la direction de machine (direction x) et une direction d'épaisseur (direction z) de manière à ce que chaque section droite (12) varie périodiquement entre une valeur minimum (lₘᵢₙ) et une valeur maximum (lₘₐₓ).

2. Carton ondulé selon la revendication 1, dans lequel une période d'une variation de largeur d'une section droite supérieure (12a) est décalée par rapport à une période d'une variation de largeur d'une section droite inférieure (12b) de la même cannelure (10), de préférence de la moitié de la longueur d'ondulation (l) de la variation de largeur.

3. Carton ondulé selon l'une quelconque des revendications précédentes, dans lequel la longueur d'ondulation (l) de la variation de largeur est inférieure à 50 mm, de préférence inférieure à 10 mm.

4. Carton ondulé selon l'une quelconque des revendications précédentes, dans lequel la valeur minimum (lₘᵢₙ) de l'ondulation de la cannelure (10) est comprise entre L/50 et L/5, de préférence entre L/20 et L/5, L étant une longueur de cellule centrale du profil trapézoïdal dans la direction de machine (direction x).

5. Carton ondulé selon l'une quelconque des revendications précédentes, dans lequel la valeur maximum (lₘₐₓ) de l'ondulation de la cannelure (10) est comprise entre L/10 et L/2, de préférence entre L/5 et L/2.

6. Carton ondulé selon l'une quelconque des revendications précédentes, dans lequel le rapport de la valeur maximum (lₘₐₓ) et de la valeur minimum (lₘᵢₙ) de l'ondulation de la cannelure (10) dans la direction transversale est supérieur ou égal à 1,5 (lₘₐₓ/lₘᵢₙ ≥ 1,5), de préférence supérieur ou égal à 2 (lₘₐₓ/lₘᵢₙ ≥ 2).

7. Carton ondulé selon l'une quelconque des revendications précédentes, dans lequel l'ondulation de la cannelure (10) dans la direction transversale est soit droite soit courbe.

8. Carton ondulé selon l'une quelconque des revendications précédentes, dans lequel, dans la direction de machine (direction x), la cannelure (10) comprend un rayon prédéfini (r) dans une section de transition entre chaque section droite (12) et sa section inclinée (13) adjacente, le rayon (r) étant de préférence compris entre L/20 et L/5, le plus préférentiellement entre L/10 et L/5.

9. Carton ondulé selon l'une quelconque des revendications précédentes, dans lequel la longueur de cellule centrale (L) du profil trapézoïdal de la cannelure (10) dans la direction de machine (direction x) est inférieur ou égal à 20 mm (L ≤ 20 mm), de préférence inférieur ou égal à 6,5 mm (L ≤ 6,5 mm).

10. Carton ondulé selon l'une quelconque des revendications précédentes, dans lequel le matériau du revêtement (1, 2) et/ou de la cannelure (10) comprend au moins l'un des matériaux du groupe comprenant :
• tous types de papier (Kraftliner, Testliner), de préférence avec un grammage entre 40 g/m2 et 500 g/m2, y compris des papiers avec un degré d'extensibilité (contrainte à la rupture) entre 5% et 15% (papier d'ensachage, papier léger),
• des papiers de cannelure à base de vieux papiers ou des papiers semi-chimiques, de préférence avec un grammage entre 40 g/m2 et 250 g/m2,
• tous types de matériaux plastiques thermo-déformables, de préférence des matériaux non-tissés contenant l'un au moins parmi des fibres de PE, des fibres de PP ou des fibres de PET, de préférence des fibres longues cardées, des matériaux aiguilletés, des matériaux thermocollés ou collés chimiquement,
• des matériaux extrudés, et
• des métaux, de préférence des alliages de fer et d'aluminium,
dans lequel le matériau du revêtement (1, 2) et de la cannelure (10) comprend de préférence du papier et diffère quant à sa composition.
